# EUROPÄISCHE PATENTSCHRIFT

(11) **EP 2 347 114 B1**
(45) Veröffentlichungstag und Bekanntmachung des Hinweises auf die Patenterteilung: **04.03.2015**
(21) Anmeldenummer: 09752187.6
(22) Anmeldetag: 16.11.2009
(51) Int. Cl.: F02M 35/024, B01D 46/00

(54) **ANSAUGLUFTFILTER FÜR VERBRENNUNGSKRAFTMASCHINEN**
INTAKE AIR FILTER FOR INTERNAL COMBUSTION ENGINES
FILTRE À AIR D'ADMISSION POUR MOTEURS À COMBUSTION INTERNE

(30) Priorität: 20.11.2008 DE 202008015438 U
(43) Veröffentlichungstag der Anmeldung: 27.07.2011
(73) Patentinhaber: Mann + Hummel GmbH, 71638 Ludwigsburg (DE)
(72) Erfinder: RIEGER, Mario, 71638 Ludwigsburg (DE); BLOSSEY, Werner, 71726 Benningen (DE)
(86) Internationale Anmeldenummer: PCT/EP2009/065213
(87) Internationale Veröffentlichungsnummer: WO 2010/057845

(56) Entgegenhaltungen:
- EP-A1- 0 470 330
- EP-A1- 1 985 351
- EP-A2- 1 752 077
- DE-A1- 19 913 181
- DE-A1-102005 013 672
- FR-A1- 2 879 944
- GB-A- 2 377 622
- KR-B1- 100 751 788

## Beschreibung

### Technisches Gebiet

Die Erfindung betrifft einen Ansaugluftfilter nach Anspruch 1 und ein Filterelement für einen derartigen Ansaugluftfilter.

### Stand der Technik

Aus der EP 0 470 330 ist ein Ansaugluftfilter für Verbrennungskraftmaschinen bekannt, welcher über ein öffenbares Gehäuse mit einem austauschbaren Filterelement verfügt. Das Gehäuse weist einen Rohlufteinlass und einen Reinluftauslass auf. Das Filterelement ist dichtend zwischen dem Rohlufteinlass und dem Reinluftauslass angeordnet und dient der Abscheidung von Verunreinigungen aus der Ansaugluft für eine nachfolgende Verbrennungskraftmaschine. Hierbei ist das Filterelement vollständig von dem Gehäuse umschlossen. Bei der Montage des Ansaugluftfilters könnte das Gehäuse geschlossen werden, ohne dass ein Filterelement eingesetzt wurde. Dies kann zur Beschädigung der Verbrennungskraftmaschine führen. Weiterhin könnte ein nicht vorschriftsmäßiges, insbesondere ein zu kurzes Filterelement eingesetzt werden, was zu einer unerwünschten Leistungsreduzierung der Verbrennungskraftmaschine führt.

Die Schrift GB 2 377 622 A offenbart einen Staubsauger mit einem Anzeiger für das Fehlen eines Filterelementes. Es ist ein Stift mit einem Fähnchen gezeigt, der am Gehäuse gelagert ist und in Kontakt mit der Endscheibe am reinluftseitigen Ende des Filterelementes steht und so das Vorhandensein eines Filterelementes signalisiert.

In der Offenlegung FR 2879944 A1 wird eine Filtereinrichtung mit einer Erkennung des Beladungszustandes des Filterelementes beschrieben. Durch eine Öffnung an einer Endscheibe des Filterelementes reicht ein elektrischer Stecker an eine Kontaktstelle am Filtermedium. Über einen im Filterelement integrierten Drucksensor wird der Beladungszustand detektiert.

In der Offenlegungsschrift DE 102005013672 A1 ist eine Filtervorrichtung für Flüssigkeiten mit einem von einem Filterkopf abnehmbaren Filtergehäuse zur Aufnahme eines Filterelements beschrieben. Ist kein Filterelement in dem Gehäuse montiert, tritt Flüssigkeit durch eine Öffnung in dem Gehäuse aus.

Der Erfindung liegt die Aufgabe zugrunde, einen Ansaugluftfilter zu schaffen, bei welchem die ordnungsgemäße Montage des Filterelements mit einfachen Mitteln überprüfbar ist.

Diese Aufgabe wird durch die Merkmale der Ansprüche 1 und 10 gelöst.

### Offenbarung der Erfindung

Der erfindungsgemäße Ansaugluftfilter für Verbrennungsmaschinen dient der Reinigung von Luft, welche für den Verbrennungsprozess erforderlich ist. Derartige Ansaugluftfilter können bei stationären Maschinen, wie z.B. Kompressoren oder bei mobilen Maschinen, wie z.B. in Fahrzeugen eingesetzt werden. Der Ansaugluftfilter verfügt über ein öffenbares Gehäuse, welches aus zumindest zwei Gehäuseteilen besteht. Hierbei kann ein Gehäuseteil als Gehäusetopf und das andere Gehäuseteil als Gehäusedeckel ausgeführt sein. Die Gehäuseteile sind aus einem umformbaren Material, wie z.B. Metallblech, oder aus einem urformbaren Material, wie z.B. thermoplastischer Kunststoff, herstellbar. Gehäuseteile aus Kunststoff sind besonders kostengünstig herstellbar, da auch aufwendige Gehäusestrukturen in einem Arbeitsgang erzeugt werden können und das Material, im Vergleich mit Metallen, leicht und preiswert ist Das Gehäuse verfügt über einen Rohlufteinlass und einen Reinluftauslass. Hierbei können Einund Auslass an demselben Gehäuseteil oder an unterschiedlichen Gehäuseteilen angeordnet sein. Zwischen dem Einlass und dem Auslass ist ein Filterelement angeordnet, welches den Einlass dichtend von dem Auslass trennt, so dass die angesaugte Luft durch das Filterelement hindurchtreten muss, bevor sie zu einer nachgeordneten Verbrennungsmaschine gelangt. Das Filterelement ist vollständig von dem Gehäuse umgeben, was einerseits das Filterelement vor mechanischen Beschädigungen aus der Umgebung schützt und andererseits eine definierte Anströmung durch den Rohlufteinlass ermöglicht. Um ein Fehlen des Filterelementes oder die Verwendung eines nicht geeigneten Filterelementes bei geschlossenem Gehäuse zu erkennen, verfügt das Gehäuse über eine zusätzliche Öffnung, welche mit einer Filtererkennungsvorrichtung korrespondiert. Diese zusätzliche Öffnung im Gehäuse kann eine beliebige Kontur aufweisen. Sie kann z.B. zylindrisch, oval, kreuzförmig, viereckig oder dreieckig ausgeführt sein. Die Filtererkennungsvorrichtung kann innerhalb oder außerhalb des Gehäuses angeordnet sein und durch die Öffnung mit der jeweils anderen Seite korrespondieren.

Bei einer besonderen Ausführungsform der Erfindung ist die Filtererkennungsvorrichtung ein Sichtfenster, welches aus einem optisch transparenten Material besteht, welches die Öffnung verschließt. Dieses durchlässige Material kann z.B. durchsichtiger Kunststoff wie Polystyrol oder Polycarbonat oder Glas sein, welche für das menschliche Auge transparent sind. Die Prüfung eines korrekt eingebauten Filterelementes kann somit durch eine einfache Sichtkontrolle in der Montage oder beim Verpacken erfolgen. Es sind jedoch auch Materialien denkbar, welche nur für geeignete Lichtquellen wie z.B. Laserstrahlen transparent sind und für das menschliche Auge undurchsichtig sind. Hierbei ist nach der Endmontage eine Prüfeinrichtung mit einer geeigneten Lichtquelle erforderlich, welche durch das Sichtfenster hindurch, anhand von Konturvorgaben oder Fixpunkten am Filterelement, das korrekt eingebaute Filterelement prüft. Fehlerhafte oder falsch eingebaute Filterelemente können so erkannt und aussortiert werden.

Der Ansaugluftfilter verfügt über ein ringförmig geschlossenes Filterelement mit einem Filtermedium und mit dessen Stirnseiten unlösbar verbundene Endscheiben Das Filterelement kann sowohl kreisringförmig, als auch oval ausgeführt sein. Das Filtermedium kann aus einem beliebigen, dem Fachmann bekannten und für den jeweiligen Einsatz geeigneten Material bestehen. Die Endscheiben können aus Metallblech, Kunststoff oder einem anderen formbeständigen Material hergestellt sein. Hierbei kann der Kunststoff ein formstabiler Thermoplast oder ein flexibles Elastomer, insbesondere PUR-Schaum, sein. Eine Endscheibe aus einem formstabilen Material kann mit dem Filtermedium z.B. verschweißt oder verklebt sein. Bei besonderen Ausgestaltungen der Endscheibe kann auch eine Kombination mehrerer verschiedener Materialien bestehen. Hierbei ist eine Kombination aus PUR-Schaum mit einem thermoplastischen Zentrum besonders vorteilhaft, da der PUR-Schaum sich dichtend mit dem Filtermedium verbindet und das Zentrum aus einem relativ unnachgiebigen Material umschließt. Eine der Endscheiben korrespondiert dichtend mit dem Reinluftauslass. Die dem Reinluftauslass gegenüberliegend angeordnete Endscheibe ist derart in dem Gehäuse abgestützt, dass eine unkontrollierte Bewegung des Filterelementes im Gehäuse verhindert wird. Die zusätzliche Öffnung im Gehäuse ist im Bereich der Endscheiben angeordnet. Somit können Teile der Endscheibe, auf die Endscheibe aufgebrachte Teile oder am Gehäuse angeordnete Teile als Filtererkennungsvorrichtung durch die Öffnung hindurch ragen. Hierzu ist es erforderlich, dass die Endscheibe über eine ausreichende mechanische Festigkeit verfügt, um das Eintreten der Teile in bzw. durch die Öffnung zu ermöglichen. Somit kann durch eine Sichtprüfung kontrolliert werden, ob der Filtereinsatz korrekt montiert ist.

Die Öffnung ist im Bereich der dem Reinluftauslass gegenüberliegend angeordneten Endscheibe angeordnet. Bei der Montage eines Filterelementes mit einem korrekten Querschnitt aber einer zu kurzen Länge, kann das Filterelement zwar mit dem Reinluftauslass verbunden und das Gehäuse geschlossen werden, aber die Filtererkennungsvorrichtung an der Endscheibe würde die Öffnung nicht kontaktieren. Somit ist bei geschlossenem Gehäuse erkennbar, dass kein korrektes Filterelement eingebaut ist.

Bei einer Weiterbildung der Erfindung erstreckt sich die Filtererkennungsvorrichtung von der Endscheibe aus in Richtung der Öffnung. Hierbei kann die Filtererkennungsvorrichtung als Dom mit beliebigem Querschnitt, einteilig mit der Endscheibe ausgeführt sein. Dies ist besonders bei Kunststoffformteilen einfach herstellbar. Der Dom kann an einer beliebigen Stelle auf der Endscheibe angeordnet sein. Eine besonders vorteilhafte Anordnung des Doms ist in einer koaxialen Anordnung zu dem Filterelement zu sehen. Hierbei wird eine Zentrierung und Lagefixierung des Filterelements in dem Gehäuse erreicht, welche an der dem Reinluftauslass gegenüberliegenden Seite angeordnet ist. Somit werden Schwingungen des Filterelements im Betrieb erheblich reduziert.

Gemäß der Erfindung ist die Filtererkennungsvorrichtung als Stift ausgeführt, welcher zumindest teilweise in die Öffnung hineinragt. Dieser Stift kann mit der Endscheibe lösbar oder unlösbar, durch z.B. verschweißen, verkleben, verschrauben, verbunden sein. Hierbei kann eine geeignete Materialpaarung gewählt werden, insbesondere Kunststoffendscheibe mit Metallstift. Weiterhin kann der Stift auch eine andere Farbe, als die Endscheibe und das Gehäuse aufweisen und sich so auch gegenüber dem Gehäuse kontrastreich abzuheben, was eine schnelle und einfache Sichtprüfung ermöglicht.

Es ist vorteilhaft, dass die Filtererkennungsvorrichtung über ein elastisches, insbesondere quader- oder zylinderförmiges Element verfügt, welches zwischen dem Filterelement und dem Gehäuse komprimierbar ist. Hierbei kann das elastische Element auf die Endscheibe z.B. aufgeklebt, aufgesteckt oder aufdosiert sein. Vorteilhafte Materialien sind hierbei Gummimischungen wie z.B. PUR-Schaum oder EPDM, Filze, Vliese, welche sich komprimieren lassen. Beim Montieren eines korrekten Filterelementes wird das elastische Element zwischen der Endscheibe und dem Gehäuse derart verspannt, dass fast keine Leckageströme durch die Öffnung in das Innere des Gehäuses eintreten können. Die Kontrolle des Filterelements erfolgt mit einem geeigneten Prüfwerkzeug, welches über einen geeignet langen Dorn verfügt. Bei der Kontrolle wird versucht, den Dorn durch die Öffnung zu stecken. Bei einem korrekten Filterelement kann der Dorn nicht weiter als die Materialstärke eindringen. Bei einem zu kurzen Filterelement wird die Öffnung nicht verschlossen, somit dringt der Dorn weiter als zulässig in das Filterinnere ein, und zeigt so die fehlerhafte Montage an.

Bei einer anderen Ausführung ist die Filtererkennungsvorrichtung am Gehäuse angeordnet und korrespondiert mit der Endscheibe des Filterelements. Hierbei kann die Endscheibe über eine einfache Geometrie ohne besondere Ausgestaltungen verfügen. Somit kann das Filterelement auch in andere Ansaugluftfilter ohne Filtererkennung integriert werden. Die Filtererkennungsvorrichtung kann als elastisches Bauteil auf der Innenseite des Gehäuses z.B. aufgeklebt oder aufgeschweißt sein. Bei der Montage eines korrekten Filtereinsatzes wird dann das Bauteil komprimiert und auf die Öffnung gepresst. Ein zu kurzer Filtereinsatz würde das Bauteil nicht auf die Öffnung pressen, wodurch die oben beschriebene Prüfmethode fehlerhafte Ansaugluftfilter erkennt.

Es ist vorteilhaft, dass die Filtererkennungsvorrichtung über ein magnetisches Element, wie z.B. einen Metallstift oder ein Metallblech verfügt. Hierbei kann dann das magnetische Element durch das Filterelement von innen auf die Öffnung gedrückt oder in die Öffnung eingeschoben werden. Bei einer Kombination des magnetischen Elements, insbesondere eines Metallstifts, mit einem elastischen Element, insbesondere einer Spiralfeder, ist das magnetische Element lageflexibel an dem Gehäuse angeordnet. Bei eingebautem Filterelement wird das magnetische Element in die Öffnung gedrückt. Beim Öffnen federt das magnetische Element wieder zurück und entfernt sich von der Öffnung. Beim Montieren eines korrekten Filterelements wird das magnetische Element wieder in bzw. auf die Öffnung gedrückt. Zur Prüfung der korrekten Montage des Filterelementes kann eine induktive Abfrage erfolgen. Hierzu wird der Ansaugluftfilter auf eine geeignete Prüfeinrichtung gestellt und das elektrische Feld im Bereich der Öffnung überprüft. Diese Prüfung des Filterelements kann auch automatisiert erfolgen.

Gemäß einer vorteilhaften Ausgestaltung ist an der Endscheibe eine Lagefixiervorrichtung angeordnet, welche mit Aufnahmekonturen im Gehäuse korrespondieren. Die Lagefixiervorrichtung kann als radial nach außen ragende Geometrie ausgeführt sein. Die Aufnahmekontur im Gehäuse bildet zumindest teilweise die Negativkontur, so dass die Lagefixiervorrichtung aufgenommen und ortsfest gehalten ist. Somit ist ein verdrehen des Filterelements im Gehäuse bzw. ein freies Schwingen des Filterelements verhindert. Durch diese Lagefixierung des Filterelements im Gehäuse kann die Filtererkennungsvorrichtung an beliebigen Stellen im Bereich der Endscheibe angeordnet sein, wobei die Filtererkennung zuverlässig gewährleistet ist.

### Kurze Beschreibung der Zeichnungen

Die Erfindung wird nachfolgend anhand von Ausführungsbeispielen näher erläutert. Hierbei zeigt:
- Figur 1: einen Ansaugluftfilter im Halbschnitt,
- Figur 2: eine alternative Ausgestaltung des Ausschnitts X aus Figur 1,
- Figur 3: eine Draufsicht entlang der Schnittlinie A-A des Ausschnitts gemäß Figur 2,
- Figur 4: eine alternative Ausgestaltung des Ausschnitts X aus Figur 1,
- Figur 5a: eine alternative Ausgestaltung des Ausschnitts X aus Figur 1 mit einem fehlerhaften Filterelement und
- Figur 5b: die Ausgestaltung gemäß Figur 5 mit einem korrekten Filter element.

### Ausführungsform(en) der Erfindung

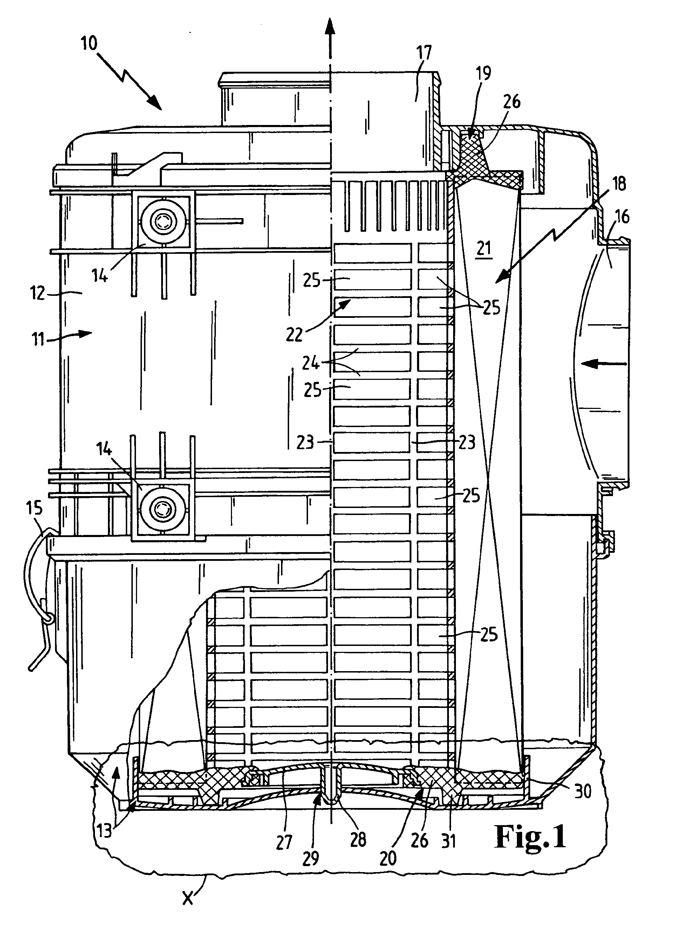

In Figur 1 ist ein Ansaugluftfilter 10 im Halbschnitt dargestellt. Der Ansaugluftfilter 10 ist zur Reinigung von Luft für eine Verbrennungskraftmaschine (nicht dargestellt) geeignet. Der Ansaugluftfilter 10 verfügt über ein öffenbares Gehäuse 11, welches durch einen Gehäusetopf 12 und einen Gehäusedeckel 13 gebildet wird. Die Gehäuseteile 12, 13 bestehen aus einem thermoplastischen Kunststoff und werden in einem Spritzgußprozess hergestellt, wobei sämtliche Konturen ohne zusätzliche Arbeitsgänge erzeugt werden. An dem Gehäusetopf 12 sind Befestigungsvorrichtungen 14 angeordnet, an welchen der Ansaugluftfilter 10 an entsprechend ausgestalteten Halterungen (nicht dargestellt) befestigt werden. Die Gehäuseteile 12, 13 sind mittels Spannbügel 15 lösbar miteinander verbunden. Hierbei sind mehrere Spannbügel 15 am Umfang des Gehäuses 11 verteilt angeordnet. Bei diesem Ausführungsbeispiel verfügt der Gehäusetopf 12 über einen Rohlufteinlass 16 und einen Reinluftauslass 17. Der Rohlufteinlass 16 und der Reinluftauslass 17 sind jeweils als Stutzen ausgeführt, an welche Schläuche bzw. Rohrleitungen (nicht dargestellt) anschließbar sind. Der Gehäusetopf 12 kann auch aus mehreren Teilen, welche z.B. miteinander verschraubt oder verschweißt sind, bestehen. Hierbei sind die Einzelteile dann aufgrund der vereinfachten Geometrie leichter herstellbar. Innerhalb des Gehäuses 12 ist ein Filterelement 18 derart angeordnet, dass der Rohlufteinlass 16 dichtend von dem Reinluftauslass 17 getrennt ist. Das Filterelement 18 verfügt über eine erste Endscheibe 19, eine zweite Endscheibe 20, ein zwischen den Endscheiben 19, 20 angeordnetes Filtermedium 21 und einen Stützkörper 22. Das Filtermedium 21 besteht aus einem gefalteten und ringförmig geschlossenen Filterpapier, welches zur Reinigung von Luft geeignet ist. Der Stützkörper 22, welcher innerhalb und somit auf der Abströmseite des Filtermediums 21 angeordnet ist, besteht aus einem formstabilen thermoplastischen Kunststoff. Hierbei weist der Stützkörper 22 Längsrippen 23 und Querrippen 24 auf. Zwischen den Rippen 23, 24 ist somit eine Vielzahl an Durchlässen 25 gebildet, durch welche die gereinigte Luft ohne weiteren Strömungswiderstand hindurchtreten kann. Der Stützkörper 22 ist an seinen Stirnseiten von den teilweise aus PUR-Schaum 26 gebildeten Endscheiben 19, 20 umschlossen. Im Bereich der ersten Endscheibe 19 ist der Stützkörper 22 geschlitzt ausgeführt, so dass elastische Radialbewegungen, welche zur Montage des Filterelements 18 im Gehäuse 11 erforderlich sind, möglich sind. Die erste Endscheibe 19 kann neben dem PUR-Schaum 26 über einen Teilbereich (nicht dargestellt) aus einem formstabilen Kunststoff verfügen, mit welchem eine schwingungsstabile Verbindung zum Gehäuse 12 erzeugt werden kann. Hierzu kann dieser Teilbereich z.B. als Stutzen (nicht dargestellt) ausgeführt sein, welcher in dem Reinluftauslass 17 gelagert ist.

Die zweite Endscheibe 20 verfügt neben dem PUR-Schaum 26 über ein formstabiles Mittelteil 27, welches als fluiddichtes Kunststoffformteil ausgeführt ist. Dieses Mittelteil 27 ist an seinem Umfang dichtend von dem PUR-Schaum 26 umschlossen und verfügt über einen konzentrisch zu dem Filterelement 18 angeordneten Dom 28, welcher sich von der Endscheibe 20 aus in Richtung des Gehäusedeckels 13 erstreckt. In montiertem Zustand ragt der Dom 28 durch eine Öffnung 29 im Gehäusedeckel 13 hindurch. Somit ist auch bei geschlossenem Gehäuse 11 erkennbar, ob ein Filterelement 18 richtig montiert wurde. Die Endscheibe 20 stützt sich in montierten Zustand mit ihrem Außenumfang radial an einer Ringgeometrie 30 des Gehäusedeckels 13, sowie mit einem stirnseitig angeordneten Wulst 31 am Inneren des Gehäusedeckels 13 ab. Hierbei wird der Wulst 31 axial verpresst, wodurch ein axiales Spiel des Filterelementes 18 in dem Gehäuse 11 verhindert wird. Bei einem nicht dargestellten zu kurzen Filterelement würde die Endscheibe 20 den Gehäusedeckel 13 nicht kontaktieren, wodurch die Öffnung 29 nicht durch den Dom 28 verschlossen wäre. Dies könnte problemlos von außen erkannt werden.

Bei einer nicht ausreichenden Abstützung des Filterelements 18 an der Ringgeometrie 30, werden Schwingungen des Filterelements 18 innerhalb des Gehäuses 11, durch den, in die Öffnung 29 eingesteckten Dom 28 aufgenommen.

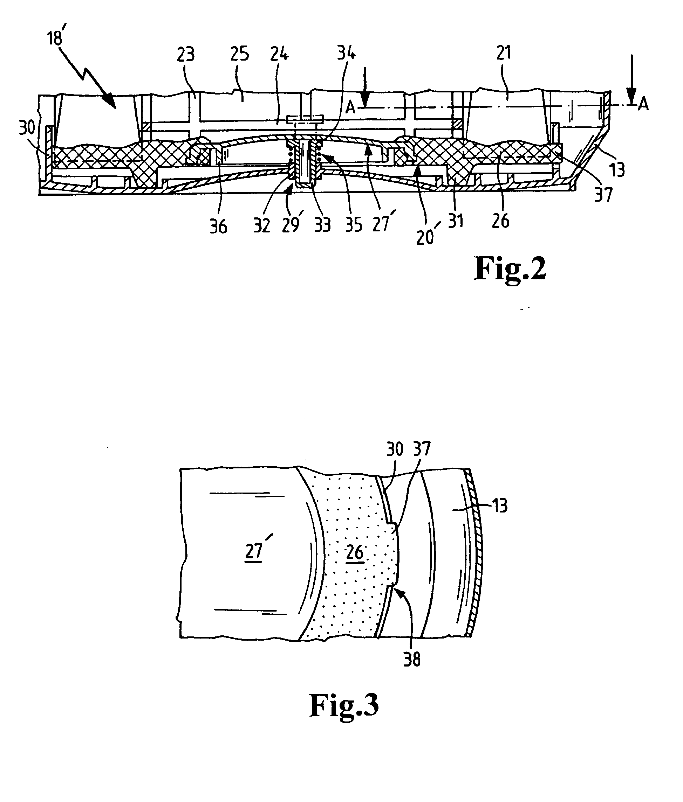

In Figur 2 ist ein Ausschnitt X des Ansaugluftfilters 10 gemäß Figur 1 in einer alternativen Ausgestaltung dargestellt. Gleiche Bauteile sind mit gleichen Bezugszeichen versehen. Das Filtergehäuse 13 verfügt, wie in Figur 1 über eine koaxial angeordnete Öffnung 29'. Die Öffnung 29' weist im Unterschied zu Figur 1 einen axialen Führungsabschnitt 32 auf. Dieser Führungsabschnitt 32, erstreckt sich von der Gehäusewandung aus einerseits nach innen und andererseits nach außen und bildet so eine ausreichende Führungsfläche für eine Schiebehülse 33, welche als Filtererkennungsvorrichtung ausgeführt ist. Somit ist bei diesem Ausführungsbeispiel die Filtererkennungsvorrichtung gehäusefest ausgeführt. Um die Lage der Schiebehülse 33 einfacher erfassen zu können, ist der durch die Öffnung 29' ragende Teil in einer anderen Farbe z.B. grün ausgeführt. Die Schiebehülse 33 verfügt über einen Lagerbund 34, an welchem sich eine Druckfeder 35 abstützt. Das Gegenlager der Druckfeder 35 ist durch die innere Stirnseite des Führungsabschnitts 32 gebildet. Die Endscheibe 20' verfügt analog zu Figur 1 über PUR-Schaum 26 und ein Mittelteil 27'. Das Mittelteil 27' ist, abgesehen von einem Stabilisierungsring 36, als ebene, leicht nach innen gewölbte Scheibe ausgeführt, welche somit über eine Druckfläche, die auf die Schiebehülse 33 wirkt, verfügt. Bei einem korrekten Filterelement 18', ist die Länge und Lage der Endscheibe 20' derart gewählt, dass im montierten Zustand bei geschlossenem Gehäuse 11 der Druck des Mittelteils 27' auf die Schiebehülse 33 ausreicht, um die Druckfeder 35 zu komprimieren. Somit wird die Schiebehülse durch die Öffnung 29' geschoben und ist von außen sichtbar. Da die Endscheibe 20' über keine Zentrierung verfügt, ist an die Endscheibe 20' im Bereich des PUR-Schaums 26 eine radial nach außen ragende Lagefixierung 37 angeformt. Diese Lagefixierung 37 greift, wie in Figur 3 dargestellt, in eine Aufnahmekontur 38 in der Ringgeometrie 30 ein. Somit kann das Filterelement 18' nur in einer einzigen Lage in das Gehäuse 11 eingesetzt werden. Bei anderen Ausführungen können auch mehrere, insbesondere drei, am Umfang verteilt angeordnete Lagefixierungen 37 vorgesehen sein, weiche mit entsprechenden Aufnahmekonturen 38 kommunizieren. Somit kann das Filterelement 18' in entsprechend mehreren Positionen eingebaut werden.

Die Filtererkennungsvorrichtung kann konzentrisch oder exzentrisch angeordnet sein. Hierbei ist die Verwendung von Lagefixierungen 37 bei exzentrischen Anordnungen besonders vorteilhaft, da so eine exakte Positionierung des Filterelementes 18' und somit Funktion der Filtererkennungsvorrichtung erreicht wird.

Beim Fehlen oder einer zu kurzen Länge des Filterelements 18' wird die Schiebehülse 33 nicht kontaktiert, wodurch keine Komprimierung der Druckfeder 35 erfolgt. Die Schiebehülse 33 wird somit nicht nach außen gedrückt und bleibt im Inneren des Gehäuses 11 (strichpunktiert dargestellt). Somit kann bei geschlossenem Gehäuse 11 erkannt werden, dass kein vorschriftsmäßiges Filterelement 18' verbaut ist.

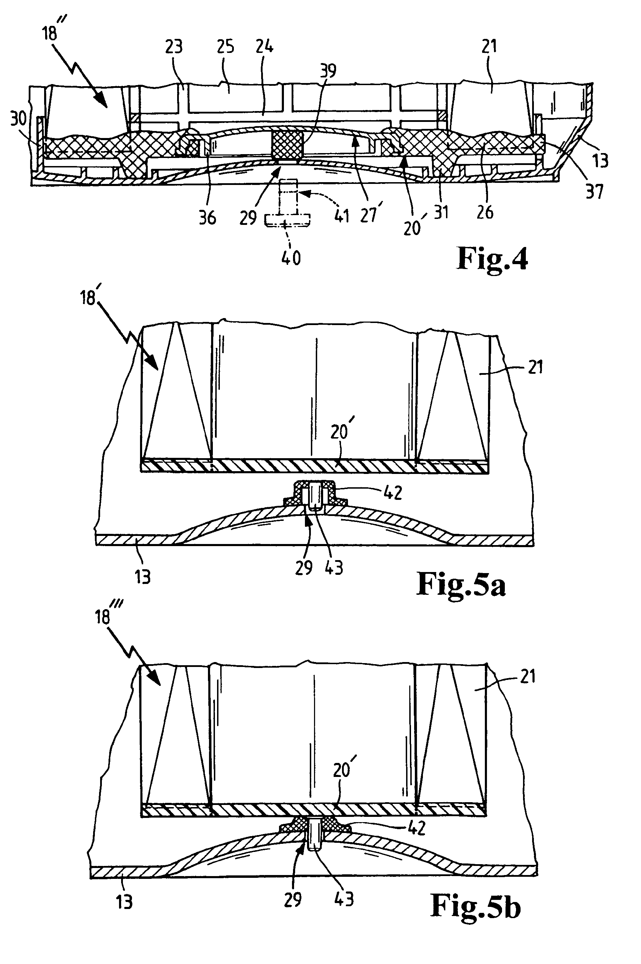

In Figur 4 ist eine weitere alternative Ausgestaltung des Ausschnitts X gemäß Figur 1 dargestellt. Gleiche Bauteile sind mit gleichen Bezugszeichen versehen. Das Gehäuse 11 bzw. der Gehäusedeckel 13 entspricht in seiner Ausgestaltung dem Gehäusedeckel 13 aus Figur 1, wobei jedoch eine Aufnahmekontur 38 in der Ringgeometrie 30 gemäß Figur 2 vorgesehen ist. Das Filterelement 18" entspricht im Wesentlichen dem in Figur 2 dargestellten Filterelement 18', wobei jedoch koaxial zu der Endscheibe 20' auf das Mittelteil 27' ein Gummielement 39 aufgeklebt ist. Im dargestellten Zustand befindet sich das Filterelement 18 in der richtigen Einbaulage, so dass das Gummielement 39 die Öffnung 29 abdeckt. Zur Prüfung des Filterelementes 18 wird ein Prüfdorn 40 (strichpunktiert dargestellt) bis zur Markierungslinie 41 in die Öffnung 29 gesteckt. Lässt sich der Prüfdorn 40 weiter, als die Markierungslinie 41 eindrücken, so ist ein fehlerhaftes Filterelement 18 in dem Gehäuse 11 enthalten.

In Figur 5a ist eine weiter alternative Ausgestaltung des Ausschnitts X gemäß Figur 1 mit einem fehlerhaften Filterelement dargestellt. Gleiche Bauteile sind mit gleichen Bezugszeichen versehen. Das Gehäuse 11 entspricht im Wesentlichen dem Gehäuse 11 der Figur 1, wobei auf der Innenseite des Gehäusedeckels 13 eine Gummikappe 42 derart befestigt ist, dass die Öffnung 29 überdeckt ist. Die Gummikappe 42 verfügt über einen einvulkanisierten magnetischen Metallstift 43. Das Filterelement 18' ist zu kurz, um mit der Endscheibe 20' die Gummikappe 42 zu kontaktieren. Somit erstreckt sich die Gummikappe 42 im entlasteten Zustand in das Filterinnere und der Metallstift 43 ragt nicht über die Wandstärke des Gehäusedeckels 13 hinaus. Bei einer automatisierten elektromagnetischen Prüfung des Ansaugluftfilters würde der Metallstift 43 kein Signal erzeugen, wodurch der Ansaugluftfilter als fehlerhaft erkannt wird.

In Figur 5b ist die Ausgestaltung gemäß Figur 5 mit einem korrekten Filterelement 18"' dargestellt. Die Gummikappe 42 wird durch die Endscheibe 20' komprimiert und auf die Öffnung 29 gedrückt. Somit wird der Metallstift 43 durch die Öffnung 29 hindurch gedrückt. Bei einer automatisierten elektromagnetischen Prüfung würde der Metallstift 43 ein Signal erzeugen, wodurch der Ansaugluftfilter als Gutteil erkannt wird.

## Patentansprüche

1. Ansaugluftfilter für Verbrennungskraftmaschinen, insbesondere für Fahrzeuge, aufweisend ein öffenbares Gehäuse (11) mit einem Einlass (16) und einem Auslass (17) und einem dichtend zwischen dem Einlass (16) und dem Auslass (17) angeordneten Filterelement (18), wobei das Filterelement (18) über ein ringförmig geschlossenes Filtermedium (21) mit an Stirnseiten angeordneten Endscheiben (19, 20) verfügt, **dadurch gekennzeichnet, dass** eine Filterelementerkennungsvorrichtung (28, 33, 39, 42, 43) vorgesehen ist, mit welcher bei geschlossenem Gehäuse (11) die ordnungsgemäße Montage des Filterelementes (18) prüfbar ist, wobei die Filterelementerkennungsvorrichtung (28, 33, 39, 42, 43) mit der dem Auslass (17) gegenüberliegenden Endscheibe (20) und mit einer zusätzlichen Öffnung (29) im Gehäuse (11) korrespondiert, welche im Bereich der dem Auslass (17) gegenüberliegend angeordneten Endscheibe (20) angeordnet ist, wobei die Filtererkennungsvorrichtung (28, 33, 39, 42, 43) als an der Endscheibe (19, 20) angeordneter Stift (28, 43) ausgeführt ist und derart durch die Öffnung (29) mit der anderen Seite korrespondiert, dass sich der Stift (28, 43) von der Endscheibe (19, 20) in Richtung der Öffnung (29) erstreckt und zumindest teilweise in die Öffnung (29) hineinragt.

2. Ansaugluftfilter nach Anspruch 1, **dadurch gekennzeichnet, dass** der Stift (28, 43) durch die Öffnung (29) hindurch ragt.

3. Ansaugluftfilter nach Anspruch 1 oder 2, **dadurch gekennzeichnet, dass** der Stift mit der Endscheibe unlösbar verbunden ist.

4. Ansaugluftfilter nach Anspruch 3, **dadurch gekennzeichnet, dass** der Stift (28, 43) über eine andere Farbe als das Gehäuse (11) verfügt.

5. Ansaugluftfilter nach Anspruch 1, **dadurch gekennzeichnet, dass** die Filtererkennungsvorrichtung (28, 33, 39, 42, 43) über ein elastisches Element (39, 42) verfügt, welches zwischen dem Filterelement (18) und dem Gehäuse (11) komprimierbar ist.

6. Ansaugluftfilter nach Anspruch 5, **dadurch gekennzeichnet, dass** die Filtererkennungsvorrichtung (28, 33, 39, 42, 43) am Gehäuse (11) angeordnet ist und mit dem Filterelement (18) korrespondiert.

7. Ansaugluftfilter nach einem der vorangehenden Ansprüche, **dadurch gekennzeichnet, dass** die Filtererkennungsvorrichtung (28, 33, 39, 42, 43) über ein magnetisches Element (43) verfügt.

8. Ansaugluftfilter nach auf Anspruch 6 rückbezogener Anspruch 7, **dadurch gekennzeichnet, dass** das magnetische Element (43) ein Metallstift (43) ist, welcher durch das elastische Element (39, 42) lageflexibel am Gehäuse (11) angeordnet ist, wobei bei montiertem Filterelement (18) der Metallstift (43) zumindest teilweise durch die Öffnung (29) hindurch ragt und bei demontiertem Filterelement (18) der Metallstift (43) im Inneren des Gehäuses (11) verbleibt.

9. Ansaugluftfilter nach Anspruch 8, **dadurch gekennzeichnet, dass** an der Endscheibe (19, 20) eine Lagefixiervorrichtung (37) angeordnet ist, welche mit Aufnahmekonturen (38) im Gehäuse (11) korrespondieren.

10. Filterelement (18) zur Verwendung in einem Ansaugluftfilter nach einem der vorhergehenden Ansprüche, der Ansaugluftfilter aufweisend ein öffenbares Gehäuse (11) mit einem Einlass (16) und einem Auslass (17) und eine zusätzliche Öffnung (29) im Gehäuse (11), welche im Bereich der dem Auslass (17) gegenüberliegend angeordneten Endscheibe (20) angeordnet ist, und die so konfiguriert ist, dass ein an einer Endscheibe (19, 20) eines einzusetzenden Filterelements (18) angeordneter Stift (28, 43) in die Öffnung (29) hineinragen kann,
wobei das Filterelement (18) dichtend zwischen dem Einlass (16) und dem Auslass (17) anordenbar ist und über ein ringförmig geschlossenes Filtermedium (21) mit an Stirnseiten angeordneten Endscheiben (19, 20) verfügt, **dadurch gekennzeichnet, dass** eine Filterelementerkennungsvorrichtung (28, 43) vorgesehen ist, mit welcher bei geschlossenem Gehäuse (11) die ordnungsgemäße Montage des Filterelementes (18) prüfbar ist, wobei die Filterelementerkennungsvorrichtung (28, 33, 39, 42, 43) mit der dem Auslass (17) gegenüberliegenden Endscheibe (20) und mit der zusätzlichen Öffnung (29) im Gehäuse (11) korrespondiert, wobei die Filtererkennungsvorrichtung (28, 43) als an der Endscheibe (19, 20) angeordneter Stift (28, 43) ausgeführt ist, der derart durch die Öffnung (29) mit der anderen Seite korrespondiert, dass sich der Stift (28, 43) von der Endscheibe (19, 20) in Richtung der Öffnung (29) erstreckt und in montiertem Zustand zumindest teilweise in die Öffnung (29) hineinragt.

## Claims

1. Intake air filter for internal combustion engines, in particular for vehicles, featuring an openable housing (11) with an inlet (16) and an outlet (17) and a filter element (18) sealingly disposed between the inlet (16) and the outlet (17), the filter element (18) having an annularly closed filter medium (21) with end disks (19, 20) disposed on front faces, **characterized in that a** filter element detection device (28, 33, 39, 42, 43) is provided, which allows to check the correct assembly of the filter element (18) when the housing is closed (11), the filter element detection device (28, 33, 39, 42, 43) corresponding with the end disk (20) opposing the outlet (17) and with an additional opening (29) in the housing (11), which is disposed in the area of the end disk (20) opposing the outlet (17), the filter detection device (28, 33, 39, 42, 43) being designed as pin (28, 43) disposed on the end disk (19, 20) and corresponding through the opening (29) with the other side in such a way that the pin (28, 43) extends from the end disk (19, 20) in the direction of the opening (29) and protrudes at least partially into the opening (29).

2. Intake air filter according to claim 1, **characterized in that** the pin (28, 43) protrudes through the opening (29).

3. Intake air filter according to claim 1 or 2, **characterized in that** the pin is connected undetachably with the end disk.

4. Intake air filter according to claim 3, **characterized in that** the pin (28, 43) has a different color than the housing (11).

5. Intake air filter according to claim 1, **characterized in that** the filter detection device (28, 33, 39, 42, 43) has an elastic element (39, 42), which is compressible between the filter element (18) and the housing (11).

6. Intake air filter according to claim 5, **characterized in that** the filter detection device (28, 33, 39, 42, 43) is disposed on the housing (11) and corresponds with the filter element (18).

7. Intake air filter according to one of the above claims, **characterized in that** the filter detection device (28, 33, 39, 42, 43) has a magnetic element (43).

8. Intake air filter according to claim 7 relating back to claim 6, **characterized in that** the magnetic element (43) is a metal pin (43), which is disposed in a flexible position on the housing (11) through the elastic element (39, 42), the metal pin (43) protruding at least partially through the opening (29) when the filter element (18) is mounted and the metal pin (43) remaining inside the housing (11) when the filter element (18) is dismantled.

9. Intake air filter according to claim 8, **characterized in that** a position fixing device (37), which corresponds with receiving contours (38) in the housing (11), is disposed on the end disk (19, 20).

10. Filter element (18) for utilization in an intake air filter according to one of the above claims, the intake air filter featuring an openable housing (11) with an inlet 16) and an outlet (17) and an additional opening (29) in the housing (11), which is disposed in the area of the end disk (20) opposing the outlet (17), and which is configured in such a way that a pin (28, 43) disposed on an end disk (19, 20) of a filter element (18) to be inserted can protrude into the opening (29),
the filter element (18) being sealingly arrangeable between the inlet (16) and the outlet (17) and having an annularly closed filter medium (21) with end disks (19, 20) disposed on front faces, **characterized in that** a filter element detection device (28, 43) is provided, which allows to check the correct assembly of the filter element (18) when the housing (11) is closed, the filter element detection device (28, 33, 39, 42, 43) corresponding with the end disk (20) opposing the outlet (17) and with the additional opening (29) in the housing (11), the filter detection device (28, 43) being designed as pin (28, 43) disposed on the end disk (19, 20) and corresponding through the opening (29) with the other side in such a way that the pin (28, 43) extends from the end disk (19, 20) in the direction of the opening (29) and protrudes in mounted state at least partially into the opening (29).

## Revendications

1. Filtre à air d'aspiration pour machines à combustion interne, notamment pour véhicules, présentant un boîtier (11) ouvrable et pourvu d'une entrée (16) et d'une sortie (17) ainsi que d'un élément filtrant (18) disposé de façon étanche entre l'entrée (16) et la sortie (17), l'élément filtrant (18) disposant d'un milieu filtrant (21) fermé en forme d'anneau avec des disques d'extrémité (19, 20) placés sur les faces frontales, **caractérisé en ce qu**'un dispositif de détection d'élément filtrant (28, 33, 39, 42, 43) est prévu, au moyen duquel, lorsque le boîtier (11) est fermé, il est possible de contrôler si le montage de l'élément filtrant (18) est correct, le dispositif de détection d'élément filtrant (28, 33, 39, 42, 43) correspondant avec le disque d'extrémité (20) opposé à la sortie (17) et avec une ouverture (29) supplémentaire dans le boîtier (11) qui est disposée dans la zone du disque d'extrémité (20) opposé à la sortie (17), le dispositif de détection de filtre (28, 33, 39, 42, 43) étant exécuté comme une broche (28, 43) placée sur le disque d'extrémité (19, 20) et correspondant à travers l'ouverture (29) avec l'autre côté de manière à ce que la broche (28, 43) s'étende du disque d'extrémité (19, 20) vers l'ouverture (29) et pénètre au moins en partie dans l'ouverture (29).

2. Filtre à air d'aspiration selon la revendication 1, **caractérisé en ce que** la broche (28, 43) dépasse à travers l'ouverture (29).

3. Filtre à air d'aspiration selon la revendication 1 ou 2, **caractérisé en ce que** la broche est reliée de façon inamovible au disque d'extrémité.

4. Filtre à air d'aspiration selon la revendication 3, **caractérisé en ce que** la broche (28, 43) a une autre couleur que le boîtier (11).

5. Filtre à air d'aspiration selon la revendication 1, **caractérisé en ce que** le dispositif de détection de filtre (28, 33, 39, 42, 43) comporte un élément élastique (39, 42) qui peut être comprimé entre l'élément filtrant (18) et le boîtier (11).

6. Filtre à air d'aspiration selon la revendication 5, **caractérisé en ce que** le dispositif de détection de filtre (28, 33, 39, 42, 43) est monté sur le boîtier (11) et correspond avec l'élément filtrant (18).

7. Filtre à air d'aspiration selon l'une des revendications précédentes, **caractérisé en ce que** le dispositif de détection de filtre (28, 33, 39, 42, 43) dispose d'un élément magnétique (43).

8. Filtre à air d'aspiration selon la revendication 7 en référence à la revendication 6, **caractérisé en ce que** l'élément magnétique (43) est une broche métallique (43) qui est disposée à travers l'élément élastique (39, 42), dans une position flexible, sur le boîtier (11), la broche métallique (43) dépassant, au moins en partie, à travers l'ouverture (29) lorsque l'élément filtrant (18) est monté et la broche métallique (43) demeurant à l'intérieur du boîtier (11) lorsque l'élément filtrant (18) est démonté.

9. Filtre à air d'aspiration selon la revendication 8, **caractérisé en ce qu**'un dispositif de fixation de position (37) correspondant avec des contours de logement (38) prévus dans le boîtier (11) est disposé sur le disque d'extrémité (19, 20).

10. Élément filtrant (18) pour une utilisation dans un filtre à air d'aspiration selon l'une des revendications précédentes, le filtre à air d'aspiration présentant un boîtier (11) ouvrable avec une entrée (16) et une sortie (17) et une ouverture (29) supplémentaire dans le boîtier (11) qui est disposée dans la zone du disque d'extrémité (20) opposé à la sortie (17) et est configurée de sorte qu'une broche (28, 43) placée sur un disque d'extrémité (19, 20) d'un élément filtrant (18) à monter puisse pénétrer dans l'ouverture (29),
l'élément filtrant (18) pouvant être disposé de façon étanche entre l'entrée (16) et la sortie (17) et disposant d'un milieu filtrant (21) fermé en forme d'anneau avec des disques d'extrémité (19, 20) placés sur les faces frontales, **caractérisé en ce qu**'un dispositif de détection d'élément filtrant (28, 43) est prévu, au moyen duquel, lorsque le boîtier (11) est fermé, il est possible de contrôler si le montage de l'élément filtrant (18) est correct, le dispositif de détection d'élément filtrant (28, 33, 39, 42, 43) correspondant avec le disque d'extrémité (20) opposé à la sortie (17) et avec l'ouverture (29) supplémentaire dans le boîtier (11), le dispositif de détection de filtre (28, 43) étant exécuté comme une broche (28, 43) placée sur le disque d'extrémité (19, 20) et correspondant à travers l'ouverture (29) avec l'autre côté de manière à ce que la broche (28, 43) s'étende du disque d'extrémité (19, 20) vers l'ouverture (29) et pénètre au moins en partie dans l'ouverture (29) en position montée.
